## Europäisches Patentamt

## European Patent Office

## Office européen des brevets

(11) Publication number: **0 029 535**
**A1**

(12) # EUROPEAN PATENT APPLICATION

(21) Application number: **80106865.1**

(22) Date of filing: **07.11.80**

(51) Int. Cl.³: **E 21 B 10/46**
**E 21 B 10/56, B 23 D 61/18**
**B 24 D 5/12**

(30) Priority: **19.11.79 US 95902**

(43) Date of publication of application:
**03.06.81 Bulletin 81/22**

(84) Designated Contracting States:
**AT DE GB NL SE**

(71) Applicant: **GENERAL ELECTRIC COMPANY**
**1 River Road**
**Schenectady New York 12305(US)**

(72) Inventor: **St. Pierre, Philippe Douglas**
**235 Medick Way**
**Worthington Ohio 43085(US)**

(74) Representative: **Catherine, Alain et al,**
**GETSCO 42, avenue Montaigne**
**F-75008 Paris(FR)**

(54) Compacts for diamond drill and saw applications.

(57) An improvement in drill bits and certain types of saw has been achieved through the use of diamond compact cutters which comprise polycrystalline diamond in the center of an annular metal carbide ring. In this design, the metal bonded carbide provides support for the polycrystalline diamond during use of the drill bit or saw helping to prevent cracking and chipping, thus prolonging its useful life.

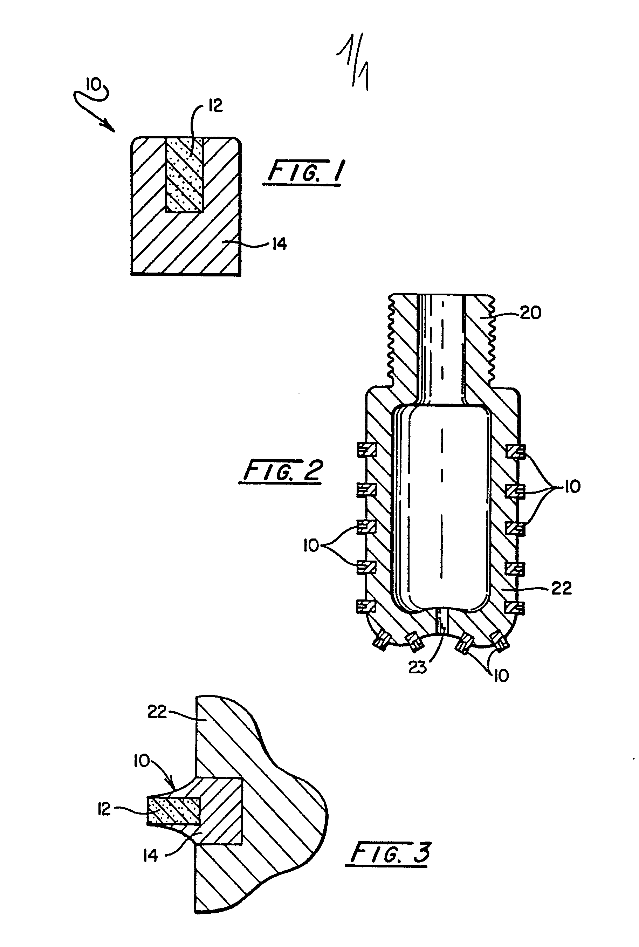

Fig. 2 shows a sectional view of a drill bit utilizing this concept. Drill bit crown 22, having central bore 23, is supported on one end of shaft 20, and the compact cutters 10 protrude from the crown. These cutters have a metal carbide support which is cup shaped to provide the further advantage that when the cutter is worm, there is no polycrystalline diamond remaining. Thus, all the useful diamond is expended in the drilling process.

FIG. 1

FIG. 2

## Compacts for Diamond Drill and Saw Applications

### Technical Field

The field of this invention is drill bits and saws which utilize diamond cutting elements. The invention is concerned with the application of polycrystalline compacts to these fields.

### Background

A compact is a polycrystalline mass of abrasive particles (e.g., diamond and cubic boron nitride) bonded together to form an integral, tough, coherent, high-strength mass. Representative U.S. patents on the subject of diamond compacts are : 3,136,615 (boron carbide bonding medium) ; 3,141,746 ; 3,239,321 (graphite-free diamond compact) ; 3,744,982 (boron alloyed diamond compact process) ; 3,816,085; and 3,913,280. A composite compact is a compact bonded to a substrate material, such as cemented tungsten carbide (see U.S. Patent 3,745,623).

Compact cutting tools made from polycrystalline diamond which has been grown from graphite are disclosed in U.S. Patent 3,850,053. Diamond compacts made from diamond mixed with graphite are disclosed in U.S. Patent 3,850,591.

U.S. Patents 3,831,428 ; 4,129,052 ; and 4,144,739 disclose wire drawing dies made from diamond. A diamond wire die compact in general comprises an inner mass which is predominantly polycrystalline diamond and an outer ring of metal bonded carbide directly bonded to and girding the inner mass for symetrical support thereof. The metal bonded carbide mass is selected from the group consisting of tungsten carbide, titanium carbide, tantalum carbide and mixtures thereof with metal bonding material therein being present in a quantity of from about 6 - 25 weight percent and selected from the group consisting of cobalt, nickel, iron and mixtures thereof.

Drill bits utilizing compact cutter elements are disclosed in the following U.S. Patents : 3,407,445 ; 3,938,599; 4,006,788 ; 4,073,354 ; and 4,098,362 (crown made of metal powder and braze alloy) ; 4,109,737 (compact cutters with tapered pins fitted into recesses) ; and 4,156,329 (furnace brazing).

In the past, drill bit applications have utilized compacts in the form of right circular cylinders with a thin layer of polycrystalline diamond bonded to a cemented carbide substrate. The cutting element is formed by attaching the compact to the drill bit by brazing or soldering the carbide substrate to a cemented carbide pin which is inserted into sockets in the drill crown. The diamond layer is generally oriented in a radial sense to the center of rotation of the drill bit and penetrates the rock essentially as a cutting tool. In the design, the cutting elements protrude from the drill bit body, and thereby provide aggressive cutting action. The stresses on each cutting element are severe, and failures occur by cracking of the compact.

Impregnated diamond stone and concrete saws are made by methods similar to those used for manufacturing other metal bonded diamond wheels but usually with more abrasion resistant bonds and coarser diamond grades. Diamond saw blades often comprise segments brazed onto a steel (e.g., nickel steel) disc or core (which may be heat treated to desired hardness, e.g., 38-41 Rockwell C). The gap between the segments serves to draw water into the cut to remove fines and expose the diamond cutting surfaces. The cores may typically have thickness ranging from 0.075 to 0.125 inch (1.9-3.18 mm) having an abrasive section height of from about 0.1250 to 0.1875 inch (3.18-4.76 mm).

The process of blade manufacturing involves powder metallurgy. Various powdered metals such as iron, copper, bronze, nickel, cobalt and tungsten carbide are combined in definite proportions to achieve the desired strength and wear resistance of the matrix. A typical bond powder may contain nickel, iron, cobalt and tungsten carbide. The diamonds are distributed within the powder in the desired concentration (e.g., 6.25 volume percent), and the resulting mixture is placed in a mold (graphite) which is heated under pressure to fuse the powders together, thus forming a solid metal matrix to hold the diamonds. The hot pressing conditions typically range between 1000 and 1100°C and 6000 to 13,000 psi ($4.1 \times 10^4$ – $9 \times 10^4$ k Pascals). The segments are then silver brazed or soldered to the core. The protrusion of diamond from the surface of the segments requires a rather thick braze strip to give a strong joint. Finishing operations may include straightening, boring, sanding, burnishing, tensioning, and grinding of the segments (contra to the normal direction of rotation) with a coarse wheel to expose the diamond crystals..

Disclosure of Invention

Large size natural diamond used in drill bits and certain types of saws may be replaced by the insertion of diamond compacts into the bit or blade. The design of the compact would be similar to that used to make wire drawing dies. The diamond compact could be made in situ, in the center of an annular ring of cemented metal carbide. The dimensions and ratio of diamond to carbide would be dictated by the size and usage of the drill bit or saw. If necessary, several diamond cores could be made in a single cemented metal carbide disc which could be sliced to provide unitary pieces, if so required. Several small cores acting together in a single disc may be desirable in some cases, because they offer more cutting points that are well reinforced by carbide.

An improved drill bit using this concept would be described as :

A.) an elongated shaft ;

B.) a crown fixed to one end of said shaft ; and

C.) a plurality of composite diamond compact cutters mounted in said crown ;

wherein the improvement comprises composite diamond compact cutters which comprise polycrystalline diamond in the center of an annular cemented metal carbide ring. Suitable metal carbides are tungsten, titanium or tantalum carbide, the most prevalent being tungsten carbide.

In this design, the protruding carbide of the annular ring would be worn down to expose the diamond at the tip, and the rest of the carbide would provide support and protection in the form of increasing impact resistance.

Brief Description of the Drawings

FIG. 1 is a sectional view of a composite compact of this invention.

FIG. 2 is a sectional view of a drill bit having cutting elements which are the composite compacts represented in FIG. 1.

FIG. 3 is a fragmentary detail of part of the drill bit of FIG. 2 showing a section of the compact cutting element after it has been worn from use.

Best Mode for Carrying Out the Invention

FIG. 1 represents a preferred embodiment in which the composite compact 10 comprises an inner mass predominately of polycrystalline diamond 12 surrounded by cup-shaped carbide annulus 14. With this design, it is possible to have a diamond compact portion fully available for active usage. Thus, when the bit or saw is worn out, none of the polycrystalline diamond section will remain.

It is also possible that the compacts of this invention be made by growing the diamond in situ at high pressure and temperature in the thermodynamic diamond stable region from graphite and catalyst. The inevitable poor quality top containing a mix of graphite and diamond would be ground down until only diamond was exposed.

One preferred form of a high pressure-high temperature (HP/HT) apparatus in which the compacts of this invention may be prepared is the subject of U.S. Patent 2,941,248 which is called a belt apparatus. It includes a pair of opposed cemented tungsten carbide punches and an intermediate belt or die member of the same material. The die member includes an aperture in which there is positioned a reaction vessel shaped to contain a reaction zone assembly. Between each punch and the die there is a gasket assembly comprising a pair of thermally insulating and electrically nonconducting pyrophyllite members and an intermediate metallic gasket.

The reaction vessel, in one preferred form, includes a hollow cylinder. The cylinder may be made of an inert material, such as salt, talc or lava which (1) is not substantially converted during HP/HT operation to a stronger, stiffer state (as by phase transformation and/or compaction) and (2) is substantially free of volume discontinuities occuring under the application of high temperatures and pressures. Materials meeting the criteria set forth in U.S. Patent 3,030,662 are useful for preparing the cylinder.

Positioned concentrically within and adjacent to the cylinder is a graphite electrical resistance heater tube. Within the graphite heater tube, there is concentrically positioned a cylindrical inert liner. The ends of the liner are fitted with inert plugs disposed at the top and the bottom.

Electrically conductive metal end discs are utilized at each end of the cylinder to provide electrical connection to the graphite heater tube. Adjacent to each disc is an end cap assembly each of which comprises a pyrophyllite plug or disc surrounded by an electrically conducting ring.

Operational techniques for simultaneously applying both high pressure and high temperatures in this type of apparatus are well known to those skilled in the super-pressure art. The reaction zone assembly (or cell) fits within the space defined by the liner and the plugs. The reaction zone assembly consists of a cylindrical sleeve of shield metal selected from the group consisting of zirconium, titanium, tantalum, tungsten, and molybdenum. Within the shield metal sleeve is a subassembly confined within a shield metal disc and a shield metal cup.

Disposed within the cavity defined by the shield metal disc and cup is an annulus (or cup) made of cold pressed sinterable carbide powder (mixture of carbide powder and appropriate metal bonding medium therefor). If desired, the annulus may be made of presintered metal bonded carbide or fully sintered metal bonded carbide. Within the annulus or cup is disposed a mass of diamond grains.

The balance of the volume in the reaction zone assembly may be taken up with a disc made of the same material as the cylinder (e.g., pyrophyllite) and discs made of hexagonal boron nitride to minimize the entry of undesirable substances into the subassembly defined by the shield metal disc and cup.

The conditions for the HP/HT process are :
- Typical diamond particles used for the matrix may be in the range of 0.1 to 500 microns largest dimension ;
- Pressure temperature conditions within the diamond stable region and above the catalyst melting point. Typical conditions range from 50 to 85 kbar at temperatures of 1400°C to 1800°C in the diamond stable region of the carbon phase diagram ;
- A reaction time of three to 60 minutes.

The diamond stable region is the range of pressure temperature conditions under which diamond is thermodynamically stable. On a pressure-temperature phase diagram, it is generally the high pressure side, above the equilibrum line between diamond and graphite.

In the case of in situ grown polycrystalline diamond, the center of the annulus is instead filled with non-diamond carbon (e.g.,graphite). A catalyst which converts non-diamond carbon to diamond must be present in contact with the graphite. This may be accomplished by using a carbide cementing metal in the annulus which is also a catalyst for the formation of diamond (e.g., cobalt, nickel or iron). It may also be accomplished by simply placing a disc of catalyst metal within the annulus.

The reaction zone assembly is loaded into the reaction vessel which is placed in the HP/HT belt apparatus. First, the pressure and then the temperature are increased and held at the desired conditions for sufficient time for sintering to occur. The sample is then allowed to cool under pressure for a short period of time, and finally the pressure is decreased to atmospheric pressure, and the compact is recovered.

The shield metal sleeve can be mechanically removed. Any adhering metal from the shield metal cup or disc can be ground or lapped off.

The rotary drill bit shown in section in FIG. 2 comprises an elongated shaft 20 (threaded for attachment to a drilling apparatus) a crown 22 fixed to one end of the shaft and a plurality of composite diamond compact cutters 10 mounted in the crown 22. Cuttings are removed by drilling fluid which flows down through central bore 23 and up through channels and/or flutes in the crown (not shown). Such a drill bit is fabricated by any one of the known techniques. One such technique is to braze the composite compact cutting elements into sockets or recesses in the steel drill bit crown using a suitable braze filler metal, such as one having the composition 50 % silver, 15.5 % copper, 15.5 % zinc, 16 % cadmium, and about 3 % nickel (obtained commercially as EASY-FLOW 3, Trademark of Handy and Harman Company).

It is also feasible to use the method of U.S. Patent 4,098,362. This involves placing the cutting elements into recesses in a graphite mold ; coating each element with a layer of flux ; pouring a tungsten carbide matrix powder over the cutting elements in the mold ; inserting a steel drill shaft into the mold ; positioning braze filler metal around the top of the mold ; and brazing in a furnace or induction heating unit. The resulting drill crown is a solid mass of carbide held together by the braze alloy infiltrant.

The cutters are usually arranged so that substantially the entire surface of the workpiece (earth) traversed by the rotating bit is engaged by the cutters. This may be accomplished by mounting the cutters in a spiral formation circumambiently around the bit face.

Such drill bits may be designed so that only the portion of the composite diamond compact cutters which contain diamond protrude from the drill crown. During use, the cutter elements would, at first, wear much like normal sintered tungsten carbide inserts. However, after the carbide had worn through to the polycrystalline diamond mass, the superior abrasion resistance of this diamond core would make such cutters longer lasting. In additions, the lateral support given by the carbide partially surrounding the diamond core would help to prevent the cracking and chipping which occurs with the thin layer type compacts discussed in the background section, as illustrated by FIG. 3.

The same principle is applicable to saw blades. The composite diamond compact cutting elements could be placed into shallow dockets in the periphery of the core.

In order to enhance their cutting ability, it is feasible to give the composite diamond compact cutters of this invention a tapered shape (e.g., pointed or chisel shape). This could be done by grinding the compact with diamond grit to the desired shape.

## C L A I M S

1. A drill bit of the type comprising :

   A.) an elongated shaft ;

   B.) a crown fixed to the end of said shaft ;
   and

   C.) a plurality of composite diamond compact
   cutters mounted in said crown ;

   characterized by composite diamond compact cutters which comprise polycrystalline diamond in the center of an annular cemented metal carbide ring.

2. An improved diamond saw blade wherein the improvement comprises a plurality of composite diamond compact cutting elements, each of which comprises a polycrystalline diamond mass in the center  of an annular cemented metal carbide ring, bonded to the blade.

3. The improved drill bit of claim 1 or the improved saw blade of claim 2 wherein the annular metal tungsten carbide ring is closed at one end, and therefor cup-shaped.

4. The improved drill bit of claim 1 or the improved diamond.saw blade of claim 2 wherein the composite diamond compacts are tapered.

07·11·80 M
0029535

1/1

FIG. 1

FIG. 2

FIG. 3

0029535

European Patent
Office

**EUROPEAN SEARCH REPORT**

Application number

EP 80 10 6865

## DOCUMENTS CONSIDERED TO BE RELEVANT

| Category | Citation of document with indication, where appropriate, of relevant passages | Relevant to claim |
|---|---|---|
| X | <u>US - A - 4 138 368</u> (EVANS)<br><br>* Figures 4,5; column 5, line 12 - column 6, line 11 * | 1-4 |
| | -- | |
| X | <u>FR - A - 1 331 914</u> (DELACOUR)<br><br>* Page 3, left-hand column, line 43 - right-hand column, line 8; figure 1;<br>page 3, right-hand column, lines 9-14; figures 2,3 * | 1-3.<br><br><br><br>4 |
| | -- | |
| X | <u>US - A - 4 081 203</u> (FULLER)<br><br>* Column 3, lines 41-48 * | 1,2 |
| | -- | |
| D | <u>US - A - 3 136 615</u> (BOVENKERK)<br><br>* Abstract * | 1,2 |
| | -- | |
| D | <u>US - A - 4 156 329</u> (DANIELS)<br><br>* Abstract * | 1,2 |
| | -- | |
| D | <u>US - A - 3 745 623</u> (WENTORF)<br><br>* Column 1, lines 8-16; column 6, line 57 - column 7, line 8 * | 1,2 |
| | -- | |
| D | <u>US - A - 3 850 053</u> (BOVENKERK)<br><br>* Abstract * | 1,2 |
| | --<br>./. | |

**CLASSIFICATION OF THE APPLICATION (Int. Cl.³)**

E 21 B 10/46
            10/56
B 23 D 61/18
B 24 D  5/12

**TECHNICAL FIELDS SEARCHED (Int. Cl.³)**

E 21 B
B 23 D
B 24 D
B 27 B

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 26-02-1981 | SOGNO |

EPO Form 1503.1  06.78

| Category | DOCUMENTS CONSIDERED TO BE RELEVANT | | CLASSIFICATION OF THE APPLICATION (Int. Cl. 3) |
|---|---|---|---|
| | Citation of document with indication, where appropriate, of relevant passages | Relevant to claim | |
| D | <u>US - A - 3 831 428</u> (WENTORF)<br>* Abstract *<br><br>-- | 1,2 | |
| | <u>US - A - 3 301 339</u> (PENNEBAKER)<br>* Column 3, lines 43-50 *<br><br>-- | 1,2 | |
| | <u>DE - C - 686 029</u> (KIEFFER)<br>* Claim 1 *<br><br>-- | 1,2 | |
| | <u>FR - E - 78 510</u> (TIRAPOLSKY)<br>* Page 3, left-hand column, lines 40-53 *<br><br>-- | 1,2 | **TECHNICAL FIELDS SEARCHED (Int. Cl. 3)** |
| | <u>US - A - 1 506 119</u> (HANSEN)<br>* Page 1, lines 96-100 *<br><br>-- | 1,2 | |
| | <u>GB - A - 542 054</u> (NORTON GRINDING TOOL)<br>* Page 2, lines 5-29 *<br><br>-- | 1,2 | |
| D | <u>US - A - 4 109 737</u> (BOVENKERK)<br>* Claim 16 *<br><br>---- | 1,2 | |